(19) Europäisches Patentamt
European Patent Office
Office européen des brevets

(11) Publication number: **0 651 089 A1**

# (12) EUROPEAN PATENT APPLICATION

(21) Application number: **94116920.3**

(51) Int. Cl.[6]: **D06M 15/643**, C08K 5/057

(22) Date of filing: **26.10.94**

(30) Priority: **27.10.93 JP 291416/93**

(43) Date of publication of application:
**03.05.95 Bulletin 95/18**

(84) Designated Contracting States:
**DE FR GB IT**

(71) Applicant: **Dow Corning Toray Silicone Company, Limited**
**Mitsui Bldg. No. 6,**
**2-3-16, Nihonbashi-Muromachi,**
**Chuo-Ku**
**Tokyo 103 (JP)**

(72) Inventor: **Ona, Isao, Dow Corning Toray Silicone Company, Ltd.,**
**2-2, Chigusa Kaigan**
**Ichihara-shi,**
**Chiba Prefecture (JP)**
Inventor: **Ozaki, Masaru, Dow Corning Toray Silicone Company, Ltd.,**
**2-2, Chigusa Kaigan**
**Ichihara-shi,**
**Chiba Prefecture (JP)**

(74) Representative: **Spott, Gottfried, Dr.**
**Spott, Weinmiller & Partner**
**Sendlinger-Tor-Platz 11**
**D-80336 München (DE)**

## (54) Adsorption treatment method of fibers.

(57) To present an adsorption treatment method for fibers which can provide excellent hand and shrink proofing against water washing to various fibers, in particular, animal fibers represented by sheep wool. Adsorption treatment method of fibers featured in that fibers are treated by the following emulsion composition for fiber treatment. (A) The emulsion composition for fiber treatment used with organopolysiloxane emulsion composition, consisting of (a) amino group-containing organopolysiloxane, (b) organosilane or its partial hydrolysis condensate, (c) colloidal silica, (d) condensation reaction catalyst, (e) nonionic surfactant or cationic surfactant, and (f) water, and (B) uptake catalyst composition consisting of (g) anionic surfactant 10-90 weight %, and (h) organic titanate esters or organic zirconate esters 90-10 weight %.

EP 0 651 089 A1

This invention deals with the adsorption method of the treatment of fibers. More specifically, it is pertinent to the adsorption treatment of fibers which enhances hand and shrinkage resistance to various fibers, in particular, animal fibers represented by sheep wool.

Up to now, pants, suits, sweaters, etc. made of sheep wool have been required to be dry-cleaned, since sheep wool gradually forms felt and shrinks when washed with water. Because of this, development of sheep wool products which allow easy washing using water has been desired. Also, in order to dye the sheep wool used for these wool products, there is frequently used a method in which fiber treatment agents are added to the dyeing bath, and fibers are then subjected to the adsorption method. The adsorption method is the treatment method by which only silicone in the fiber treatment agents is adsorbed by fibers selectively, and in high concentration. Compared with the other treatment methods, such as pad roll process, such a method allows a high adsorption of silicone to the fibers, and therefore, the amount used can be reduced making it economical. In addition, there is less waste, and the treatment of the waste liquid is easy, and therefore, the method has been preferably used. Previously, the present inventors proposed, in JP-A 57-111354, an organopolysiloxane composition which consisted of amino group-containing organopolysiloxane, surfactant, esters such as organic titanate, organic zirconate, or organic germanate, organic acid such as carboxylic acid, and water, as the treating agent for the adsorption method. However, when animal fibers were subjected to the adsorption method using this composition, there was a drawback in that the hand of the treated fibers is stiff. Further, the present inventors proposed, in JP(Kokai) 4-119173, a fiber treatment agent composition, which consisted of amino group-containing organopolysiloxane, organosilane, colloidal silica, a catalyst for a condensation reaction, nonionic surfactant or cationic surfactant, and water, could give an excellent hand and shrinkage resistance to animal fibers. However, since this composition contains colloidal silica, it was not adsorbed to fibers, and therefore, it was not suitable for the adsorption method.

In order to solve the above problems, the present inventors have made intensive studies, and reached the present invention. Namely, the objective of the present invention is to present an adsorption method for the treatment of fibers which can give an excellent hand and shrinkage resistance against washing in water, to various fibers, in particular, animal fibers represented by sheep wool.

This invention is pertinent to the adsorption method for fibers in that the fibers are treated by the following emulsion composition for fiber treatment. An emulsion composition comprising:

(A) an organopolysiloxane emulsion composition comprising:

a. 100 parts by weight of an amino alkyl-containing organopolysiloxane having the general formula selected from the group consisting essentially of:

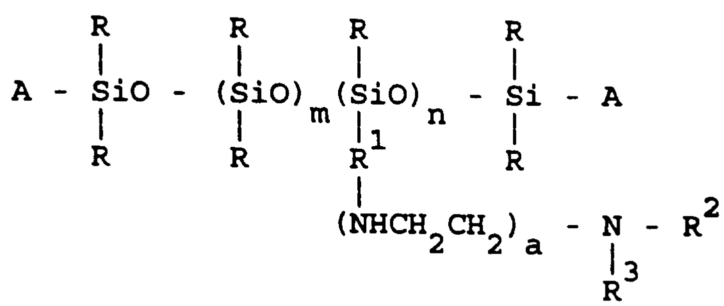

and

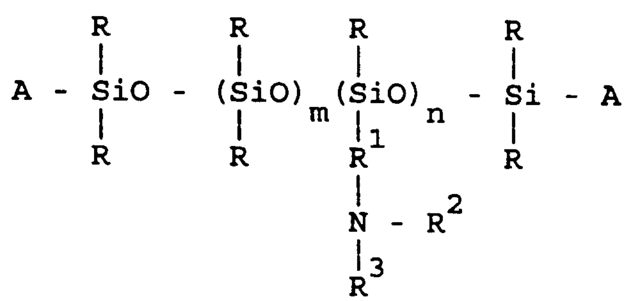

wherein each R is independently selected from monovalent hydrocarbon groups having 1 to 20

carbon atoms, $R^1$ is a divalent hydrocarbon group having 1 to 8 carbon atoms, $R^2$ and $R^3$ are each selected from hydrogen atoms or monovalent hydrocarbon groups, and A is a hydroxyl or alkoxyl group having from 1 to 5 carbon atoms, m and n are integers of 1 or larger, and a is an integer of 1 to 5, wherein the viscosity of the organopolysiloxane is at least 10 centistokes at 25°C;

b. 0.1 to 30 parts by weight of an organosilicon compound selected from the group having the general formula:

(1)

$$Q - \underset{\displaystyle R_b}{Si}(OR_4)_{3-b}$$

and

(2) partial hydrolyzates of (1), wherein Q is a monovalent organic group which contains a radical selected from the group consisting essentially of

(i) amino alkyl,

(ii) epoxy,

(iii) acryloxy,

(iv) methacryloxy, and

(v) a monovalent hydrocarbon group having from 1 to 5 carbon atoms; $R^4$ is a monovalent hydrocarbon group having 1 to 5 carbon atoms and b has a value of 0 or 1;

c. 1 to 50 parts by weight of colloidal silica;

d. 0.1 to 20 parts by weight of a catalyst for a condensation reaction;

e. 1 to 30 parts by weight of a surfactant selected from the group consisting essentially of

nonionic surfactants and

cationic surfactants, and

f. water, and

(B) 0.1 to 20 parts by weight based on 100 parts by weight of (A), of a second catalyst consisting of

g. 10 to 90 weight percent of an anionic surfactant, and

h. 90 to 10 weight percent of an ester selected from the group consisting essentially of organic titanate esters and, organic zirconate esters.

The emulsion composition for fiber treatment used in the method of the present invention is a composition in which organopolysiloxane emulsions composition, (A), is compounded with the catalyst composition, constituent (B).

The amino group-containing organopolysiloxane, a. gives fibers pliability, smoothness, compression recovery, slimness, lubricity, crease-proofing, and shrinkage resistance. Furthermore, the hydroxyl groups or alkoxyl groups at the terminal ends of the molecular chain react with the constituent (B) for crosslinking and the above effects are made long lasting. The material is expressed by the general formulae:

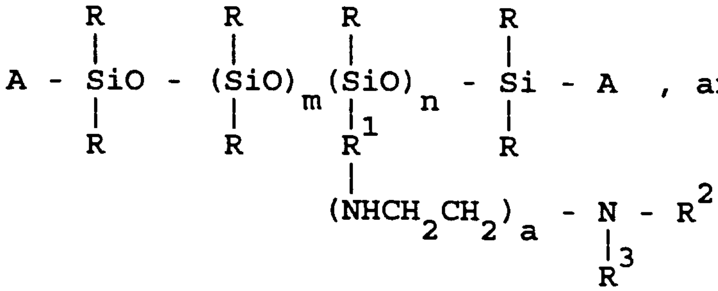

, and

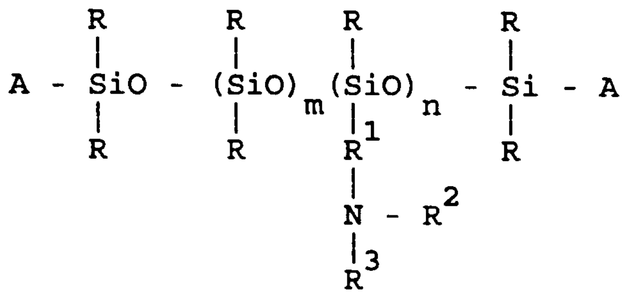

In the above formula, R is the same or different kinds of monovalent hydrocarbon groups having 1-20 carbon atoms, and they can be methyl, ethyl, propyl, butyl, pentyl, vinyl, 3,3,3-trifluoropropyl, phenyl, allyl, and the cyclohexyl group. Among these, methyl is the most common, but the combinations of methyl group and other groups are common too. Also, although all R's in a molecule do not have to be the same, at least 50 mole % of R's are preferred to be methyl groups. $R^1$ is a divalent hydrocarbon group, and it can be an alkylene group, such as methylene, ethylene, propylene, butylene, and the isobutylene group, and alkylene arylene groups expressed by the formula : $-(CH_2)_2-C_6H_4-$. Among these, the ethylene and propylene groups are the most common. $R^2$ and $R^3$ are selected from hydrogen atoms or monovalent hydrocarbon groups, and the monovalent hydrocarbon group can be methyl, ethyl, propyl, phenyl, and the cyclohexyl group. A is hydroxyl group or alkoxyl group having from 1 to 5 carbon atoms, and the alkoxyl group can be methoxy, ethoxy, propoxy, and the butoxy group. Among these, the hydroxyl group and the methoxy group are common. m and n are integers of 1 or greater. a is an integer of 1-5, and 1 is common. The viscosity of this constituent at 25°C should be at least 10 centistokes, and preferably in the range of 50-10,000 centistokes. This is because, if it is less than 10 centistokes, it becomes impossible to give fibers pliability, smoothness, compression recovery, crease-proofing, and shrinkage resistance. Such an amino group-containing organopolysiloxane can be manufactured easily, for example, by heating the hydrolysis condensate obtained by hydrolysis with excess water of dimethoxysilane, expressed by the formula : $H_2N(CH_2)_3Si(CH_3)(OCH_3)_2$, and dimethylcyclopolysiloxane at 80-100°C in the presence of a basic catalyst without using an endblocker compound in an equilibration reaction, and after reaching the desired viscosity, neutralizing the basic catalyst with acid (Refer to JP(Kokai) 53-98499).

Organosilanes or their partial hydrolysis products, constituent (b), gives fibers durable shrinkage resistance, smoothness, and pliability by not only reacting with hydroxyl groups and alkoxyl groups at the terminal ends of the constituent (a) for crosslinking, but also reacting with hydroxyl groups in colloidal silica, constituent (c), and further by amino groups or epoxy group in this constituent reacting with amino groups, carboxyl groups or mercapto groups in sheep wool or silk. The organosilane of this constituent is expressed by the general formula :

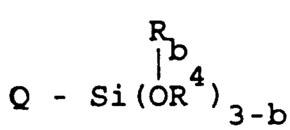

In the above formula, Q is a monovalent organic group containing amino group, epoxy group, acryloxy group, or a methacryloxy group, or monovalent hydrocarbon group having 1-20 carbon atoms. The amino group-containing monovalent organic group can be, for example, the group expressed by the formula :

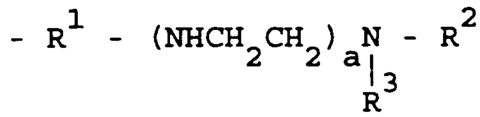

(where $R^1$, $R^2$, $R^3$, and a are the same as above.), the group expressed by the formula : - $CH_2CH_2CH_2NH_2$, or the group expressed by the formula : - $CH_2CH_2CH_2NHCH_2CH_2NH_2$. The epoxy group-containing organic group can be the group expressed by the formula:

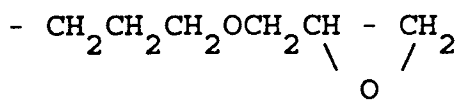

or the group expressed by the formula :

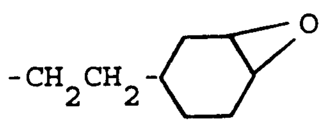

The acryloxy group-containing monovalent organic group can be the group expressed by the formula : - $CH_2CH_2CH_2OOCCH = CH_2$, and the methacryloxy group-containing monovalent organic group can be the group expressed by the formula:
- $CH_2CH_2CH_2OOCC(CH_3) = CH_2$. The monovalent hydrocarbon having 1 to 20 carbon atoms can be the same groups as described for R. Among these, the amino containing monovalent organic group, and the epoxy containing monovalent organic group are the most effective. Also, R is the same as described above. $R^4$ is a monovalent hydrocarbon group and can be a methyl, ethyl, or propyl group. b is 0 or 1, but preferably 0.

Another constituent of the present invention the partial hydrolysis condensate, can be obtained by holding the above organosilane, water, and small amount of acid or alkali at 50-70 °C.

The amount of the constituent (b) useful in this invention is in the range of 0.1-30 parts by weight based on 100 parts by weight or a, and preferably in the range of 0.5-10 parts by weight. This is because, if it is less than 0.1 part by weight, the adhesion of the organopolysiloxane coat to the fibers decreases, and if it exceeds 30 parts by weight, organopolysiloxane coat becomes fragile, and in either case, it is not possible to give fibers durable shrinkage resistance, pliability, and smoothness.

Constituent (c) colloidal silica, functions to give durability to the shrinkage resistance, pliability, and smoothness by condensation reaction between many hydroxyl groups on its surface and alkoxyl groups or hydroxyl groups of the constituent (a) and the constituent (b) to form crosslinks which result in a strong organopolysiloxane coat being formed. The colloidal silica used in the present invention is that formed in the colloid state by hydrolysis of tetraethyl silicate or sodium silicate in water containing surfactant, etc., and the particle size is about 4-20 $\mu$m. Such colloidal silica is usually dispersed in water in the amount 5-40 weight %, and especially, those, which are stable in the presence of noionic surfactant or cationic surfactant, are preferred. Also, it is possible to use those in which the surface is covered with aluminum. The compounding amount of the constituent (c)useful in this invention is in the range of 1-50 parts by weight 100 parts by weight, of (a) and preferably in the range of 10-25 parts by weight. This is because, if it is less than 1 part by weight, the organopolysiloxane coat becomes weak and does not have durability to washing, and if it exceeds 50 parts by weight, the organopolysiloxane coat becomes stiff and has a poor hand.

Constituent (d), the catalyst for the condensation reaction, functions to promote crosslinking of the constituent (a), the constituent (b), and the constituent (c). Such catalyst for the condensation reaction can be organometallic catalysts, and catalysts in the amine family which do not contain organic silicon. The organometallic catalyst can be, for example, metal salts of organic acid such as dibutyl-tin-diacetate, dibutyl-tin-dilaurate, dioctyl-tin-dilaurate, dibutyl-tin-dioctate, zinc naphthenate, cobalt naphthenate, zinc

octate, cobalt octate, diisooctylmercaptoacetate dioctate, zirconium naphthenate, zirconium octate, and tetrabutyl orthotitanate. Catalysts in the amine family which do not contain organic silicon can be diethanol amine, and triethanol amine. Also, this constituent is used preferably in the form of emulsion by emulsifying it with nonionic surfactant or cationic surfactant in advance in order to disperse it uniformly. The amount of the constituent (d) is in the range of 0.1-20 parts by weight based on 100 parts by weight of (a), and preferably in the range of 0.5-15 parts by weight.

Constituent (e), the nonionic surfactant or cationic surfactant, functions to emulsify the constituent (a), and also other constituents, as needed. This constituent can be polyoxyalkylene alkylethers, polyoxyalkylene alkylphenolethers, polyoxyalkylene alkylesters, polyoxyalkylene sorbitan alkylesters, sorbitan alkylesters, aliphatic amine salts, quaternaryammonium salts, and alkyl pyridinium salts and the like, and one or more than one kind of these can be used. The amount of constituent (e) is in the range of 1-30 parts by weight based on 100 parts by weight (a).

Water, the constituent (f), is the constituent used to emulsify the constituent (a) constituent (e), and there is no special limitation for its amount as long as there is a sufficient amount to form the emulsion.

Although the organopolysiloxane emulsion composition, constituent (A), consists of the above constituents (a) - (f), other constituents such as organopolysiloxanes other than constituent (a), crease-proofing agents, thickeners, colorants, preservatives, rust preventives, etc. can be added, as needed, as long as the objective of the present invention is not impaired.

This organopolysiloxane emulsion composition can be manufactured, for example, by first manufacturing an emulsion by adding the surfactant, constituent (e) and water, and constituent (f), to the amino group-containing diorganopolysiloxane, constituent (a), and the organosilane or its partial hydrolysis condensate, constituent (b), and then adding colloidal silica, the constituent (c), and catalyst for the condensation reaction, constituent (d), which has been prepared in the emulsion form in advance. At this point, they are preferably subjected to aging for 10-20 days at room temperature.

The second catalyst composition, constituent (B), functions to cause the organopolysiloxane emulsion to be adsorbed on the fibers and other objects to be treated. This catalyst composition consists of anionic surfactant, constituent (g), 10-90 weight % and organotitanate esters or organozirconate esters, the constituent (h), 90-10 weight %, and preferably consists of constituent (g) 30-70 weight % and constituent (h) 70-30 weight %. If one of the constituents, either constituent (g) or constituent (h), is missing, the adsorption does not take place. The amount of the constituent (B) is in the range of 0.1-20 parts by weight per 100 parts by weight of constituent (A), and is preferably in the range of 1-10 parts by weight.

Constituent (g), anionic surfactant, can be an alkylbenzenesulfonic acid such as hexylbenzenesulfonic acid, octylbenzenesulfonic acid, decylbenzenesulfonic acid, dodecylbenzenesulfonic acid, cetylbenzenesulfonic acid, and myristylbenzenesulfonic acid; sulfuric ester of polyoxyethylenemonoalkylether; of the sodium salt, potassium salt, rubidium salt, ammonium salt, and amine salt of alkylnaphthylsulfonic acids.

Constituent (h), organic titanate esters or organic zirconate esters, can be for example tetraethyl titanate, tetrapropyl titanate, tetraisopropyl titanate, tetra-n-butyl titanate, tetra-2-ethylhexyl titanate, tetraphenyl titanate, tetraoctadecyl titanate, tetrastearyl titanate, diisopropoxybisacetylacetone titanate, tri-n-butoxymonostearyl titanate, dihydroxybislactic acid titanate, compounds expressed by the following formulae and their partial hydrolysis condensates, and also the compounds in which titanium is replaced by zirconium in the above and the following compounds and their partial hydrolysis condensates;

formula : $Ti(OC_2H_4NH_2)_4$,
formula : $(C_3H_7O)Ti(OC_2H_4NH_2)_3$,
formula : $(C_3H_7O)_2Ti(OC_2H_4NH_2)_2$,
formula : $(C_4H_9O)_3Ti(OC_2H_4NH_2)$,
formula : $Ti[OC_2H_4NH(C_2H_4OH)]_4$,
formula : $(C_4H_9O)Ti[OC_2H_4NH(C_2H_4OH)]_3$,
formula : $(C_4H_9O)_2Ti[OC_2H_4NH(C_2H_4OH)]_2$,
formula : $(C_4H_9O)_3Ti[OC_2H_4NH(C_2H_4OH)]$,
formula : $Ti[OC_2H_4N(C_2H_4OH)_2]_4$,
formula : $(C_4H_9O)Ti[OC_2H_4N(C_2H_4OH)_2]_3$,
formula : $(C_4H_9O)_2Ti[OC_2H_4N(C_2H_4OH)]_2$,
formula : $(C_4H_9O)_3Ti[OC_2H_4N(C_2H_4OH)]$,
formula : $(C_3H_7O)_2Ti[OC_2H_4N(C_3H_6OH)_2]_3$,

formula :

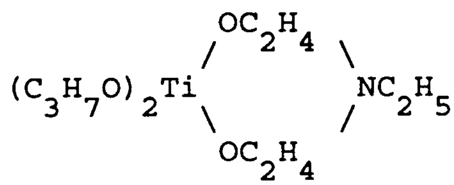

formula :

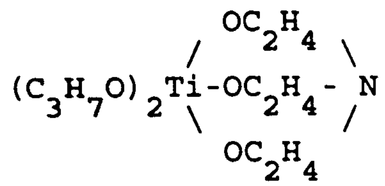

formula :

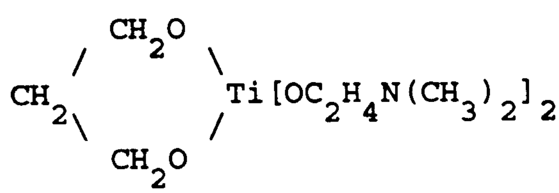

formula :

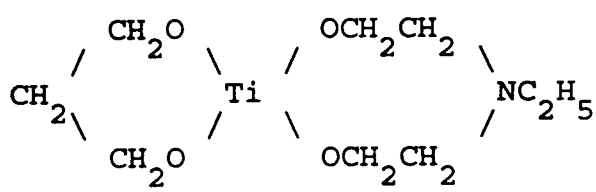

The emulsion composition for treatment of fibers used in the present invention can be obtained by adding the second catalyst composition, and constituent (B), to the organopolysiloxane emulsion composition, constituent (A). In this process, it is preferred to add the second catalyst composition, and constituent (B), after the organopolysiloxane emulsion composition, constituent (A), is diluted with a large amount of water depending on the purpose. Also, the timing of the addition of the constituent (B) to the constituent (A) is preferably just before the adsorption treatment of fibers.

Fiber materials, to which the treatment method of fibers in the present invention is applied, can be natural fibers such as sheep wool, silk, alpaca, mohair, angora, linen, cotton, asbestos; regenerated fibers such as rayon, cellulose acetate; synthetic fibers such as polyester, polyamide, vinylon, polyacrylonitrile, polyethylene, polypropylene, spandex; and glass fibers, carbon fibers, and silicon carbide fibers. Among these, it is particularly effective on the animal fibers represented by sheep wool. The shape of the fibers can be top, hank, staple, filament, tow, woven fabric, knitted, nonwoven fabric, resin treated cloth, artificial leather, etc., and especially for filament, tow, woven fabric, knitted, nonwoven fabric, etc., a continuous treatment is effective.

The treatment of fibers can be performed, for example, as the following. First, the fibers are treated by soaking in the emulsion composition for the treatment, and stirring for a fixed time. After the treatment, the fibers are taken out of the emulsion composition and wrung and dried.

When the fibers are subjected to this treatment by the method in the present invention, mostly constituents (a) - (d) are adsorbed on the fibers, and the milky white emulsion turns into a clear liquid after the treatment. This makes the treatment of the waste easy. Furthermore, it is possible to make a treatment bath by adding the above emulsion composition for fiber treatment to the waste liquid after the treatment, and to use it again for the treatment of fibers, and therefore, water consumption can be saved. Such a treatment can be favorably used, for example, at the time of dyeing or after the dyeing of top, and hank.

In the following, the present invention is explained in detail by Examples. In Examples, "parts" means parts by weight and "%" means weight %. Viscosity is the value at 25 °C. Also, the washing shrinkage ratio (%) and the adsorption ratio (%) were measured by the following method.

Washing shrinkage ratio (%)

After the treatment, fibers were heat-treated at 130 °C for 5 minutes in a hot-air circulation type dryer. After they were cooled to room temperature, 30 cm markings were made at 3 places in both X and Y direction, and washed 5 times according to the following washing conditions. After washing, the fibers were spread horizontally and dried, and the washing shrinkage ratio (%) in X and Y directions were measured.

Washing condition

With the condition of the liquor ratio 1:50, temperature 40 °C, and time 15 minutes, the sample was washed once using a weak alkaline detergent [Kao Corp., trade name : ZAB ], and then rinsed twice with water by the same condition but without the detergent. This washing cycle was counted one.

Adsorption ratio (%)

Using a microsyringe, 0.06 cc each of emulsion was taken from the emulsion composition for the fiber treatment before the treatment of fibers and the emulsion composition for the fiber treatment after the treatment, and dropped at the center of a quantitative filter paper. This filter paper was dried and its center portion was cut out. Then, the count of SiK(α) of the emulsion was measured using the x-ray fluorescence analyzer, and the adsorption ratio (%) was determined by the following equation.

$$\text{Adsorption ratio} = \left(1.00 - \frac{\text{SiK}(\alpha)\text{ count after treatment}}{\text{SiK}(\alpha)\text{ count before treatment}}\right) \times 100$$

Example 1

An amino group-containing organopolysiloxane having the formula:

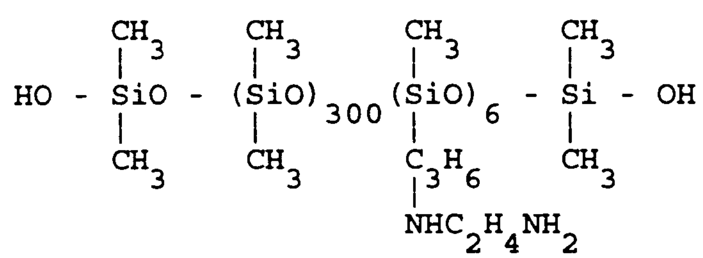

and a viscosity 750 centistokes, 300 parts, and the partial hydrolysis condensate of methyltrimethoxysilane with a viscosity of 55 centistokes, 5 parts, were mixed uniformly. Polyoxyethylene (ethylene oxide 6 mole) laurylether, 30 parts, and water, 150 parts, were added to this and stirred uniformly. This mixture was emulsified using an emulsifier of the colloid mill type, and then, water, 515 parts, was added and a uniform emulsion was prepared. To 80 parts of the emulsion prepared, colloidal silica [Nissan Chemical Industries, trade name : Snowtex AK (water 80 %, colloidal silica 20 %), 35 parts, was added. Further, added to this was 1 part of zinc octate emulsion, which was prepared by emulsifying 20 parts of zinc octate, as the

condensation reaction catalyst, and 2.5 parts of polyoxyethylene (45 mole) nonylphenolether, 2.5 parts of dialkyl (coconut oil) dimethylammonium chloride, and 75 parts of water. The organopolysiloxane emulsion composition was prepared in this manner.

The organopolysiloxane emulsion composition obtained was transferred to a one liter beaker and to this, water, 6400 cc, sodium sulfonate salt of polyoxyethylene (6 mole) laurylether, 0.8 part, and tetrapropyl titanate, 0.8 part, were added in order, and they were uniformly dissolved and dispersed, and the emulsion composition for fiber treatment was prepared. In this emulsion composition for fiber treatment, pre-dyeing serge cloth of 100 % sheep wool, 640 g, was soaked for 60 minutes for treatment with occasional stirring. After the treatment, the cloth was taken out of the emulsion composition for fiber treatment, and after the excess water was blotted with filter paper, dried overnight at room temperature. Of the cloth, which was subjected to the adsorption treatment with the emulsion composition for fiber treatment in this manner, the washing shrinkage ratio (%) and the adsorption ratio (%) were measured. Furthermore, the crease-proofing (%) was measured in accordance with the Monsanto method in JIS L1096 "general fabric testing method", and the hand was evaluated by feeling with fingers. These results are shown in Table 1. Also, the overall evaluation for the adsorption treatment method is recorded in Table 1.

Example 2

An organopolysiloxane emulsion composition was prepared by the same procedure as Example 1 except that the amount of colloidal silica was changed to 20 parts. From the organopolysiloxane emulsion composition obtained, the emulsion composition for fiber treatment was prepared similarly to Example 1, and pre-dyeing serge cloth of 100 % sheep wool was subjected to the treatment. The treated cloth was subjected to the measurements of the washing shrinkage ratio (%), the adsorption ratio (%), the crease-proofing (%), and the hand by the same way as Example 1. These results are shown in Table 1. Also, the overall evaluation for the treatment is recorded in Table 1.

Comparison example 1

An organopolysiloxane emulsion composition was prepared by the same procedure as Example 2 except that tetrapropyl titanate was not used. From the organopolysiloxane emulsion composition obtained, the emulsion composition for fiber treatment was prepared similarly to Example 2, and pre-dyeing serge cloth of 100 % sheep wool was subjected to the treatment. The treated cloth was subjected to the measurements of the washing shrinkage ratio (%), the adsorption ratio (%), the crease-proofing (%), and the hand by the same way as Example 2. These results are shown in Table 1. Also, the overall evaluation for the treatment method is recorded in Table 1.

Comparison example 2

An organopolysiloxane emulsion composition was prepared by the same procedure as Example 2 except that the sodium sulfonate salt of polyoxyethylene (6 mole) laurylether was not used. From the organopolysiloxane emulsion composition obtained, the emulsion composition for fiber treatment was prepared similarly to Example 2 and the cloth was treated by the treatment. The treated cloth was subjected to the measurements of the washing shrinkage ratio (%), the adsorption ratio (%), the crease-proofing (%), and the hand by the same way as Example 2. These results are shown in Table 1. Also, the overall evaluation for the treatment is recorded in Table 1.

Comparison example 3

An organopolysiloxane emulsion composition was prepared by the same procedure as Example 2 except that the amount of colloidal silica was changed to 80 parts. From the organopolysiloxane emulsion composition obtained, the emulsion composition for fiber treatment was prepared similarly to Example 2 and the cloth was treated by the treatment. The treated cloth was subjected to the measurements of the washing shrinkage ratio (%), the adsorption ratio (%), the crease-proofing (%), and the hand by the same way as Example 2. These results are shown in Table 1. Also, the overall evaluation for the adsorption treatment method is recorded in Table 1.

Comparison example 4

An organopolysiloxane emulsion composition was prepared by the same procedure as Example 2 except that the amount of colloidal silica was changed to 0.5 parts. From the organopolysiloxane emulsion composition obtained, the emulsion composition for fiber treatment was prepared similarly to Example 2 and the cloth was treated with the treatment. The treated cloth was subjected to the measurements of the washing shrinkage ratio (%), the adsorption ratio (%), the crease-proofing (%), and the hand by the same way as Example 2. These results are shown in Table 1. Also, the overall evaluation for the treatment is recorded in Table 1.

Comparison example 5

An organopolysiloxane emulsion composition was prepared by the same procedure as Example 2 except that colloidal silica was not used. From the organopolysiloxane emulsion composition obtained, the emulsion composition for fiber treatment was prepared similarly to Example 2 and the cloth was treated by the treatment. The treated cloth was subjected to the measurements of the washing shrinkage ratio (%), the adsorption ratio (%), the crease-proofing (%), and the touch by the same way as Example 2. These results are shown in Table 1. Also, the overall evaluation for the adsorption treatment method is recorded in Table 1.

## Table 1

| | Example 1 | Example 2 | Comparison example 1 | Comparison example 2 | Comparison example 3 | Comparison example 4 | Comparison example 5 |
|---|---|---|---|---|---|---|---|
| Washing shrinkage ratio (%) | | | | | | | |
| Y direction | 3.0 | 3.3 | 8.8 | 8.7 | 5.6 | 6.2 | 10.4 |
| X direction | 1.2 | 1.5 | 3.9 | 4.0 | 3.0 | 3.5 | 7.0 |
| Total | 4.2 | 4.8 | 12.7 | 12.7 | 8.6 | 9.7 | 17.4 |
| adsorption ratio (%) | 98.5 | 97.7 | 12.8 | 13.3 | 95.0 | 98.8 | 96.0 |
| Crease proofing (%) Y direction | 87.7 | 85.3 | 80.3 | 80.5 | 81.3 | 80.0 | 80.0 |
| Hand | Very good, and good voluminosity. | Very good, and good voluminosity. | Stiff and insufficient. | Stiff and insufficient. | Somewhat pliable but stiff and insufficient. | Somewhat pliable but stiff and insufficient. | Somewhat pliable but fragile and insufficient. |
| Overall evaluation | Good | Good | No good | No good | No good | No good | No good |

Example 3

Using the emulsion composition for fiber treatment obtained in Example 2, spun yarn of 100 % sheep wool for sweater (640 g) was treated by the treatment in the same manner as Example 2, and the adsorption ratio (%) of this yarn and its hand by feeling with fingers was measured. From the measured adsorption ratio (%), the total sticking amount of the silicone components (amino group-containing

diorganopolysiloxane, partial hydrolysis condensate of methyltrimethoxysilane, colloidal silica) sticking to the yarn was measured, and further, the color of the emulsion composition for fiber treatment after the adsorption treatment of the yarn was measured visually. These results are shown in Table 2.

Comparison example 6

An emulsion composition for fiber treatment was prepared by the same procedure as Example 2 except that the sodium sulfonate salt of polyoxyethylene (6 mole) laurylether and tetrapropyl titanate were not used. Using the emulsion composition for fiber treatment obtained, spun yarn of 100 % sheep wool, 640 g, was used for the adsorption treatment in the same manner as Example 2, and the adsorption ratio (%) of this yarn and its hand were measured. From the measured adsorption ratio (%), the total amount of the silicone components amino group-containing diorganopolysiloxane, partial hydrolysis condensate of methyltrimethoxysilane, colloidal silica, sticking to the yarn was measured, and further, the color of the emulsion composition for fiber treatment after the adsorption treatment of the yarn was measured visually. These results are shown in Table 2.

Table 2

| | Example 3 | Comparison example 6 |
|---|---|---|
| adsorption ratio (%) | 98.7 | 5.3 |
| Hand | Rich in smoothness, soft and airy, very good. | Slight improvement, but not in soft and airy nature. |
| Total amount of silicone components on the wool (%) | 4.9 | 0.5 |
| Post-treatment color of composition | Clear | A little opaque |

Example 4

Using the emulsion composition for fiber treatment obtained in Example 2, knitted fabric of 100 % acrylic fiber, 640 g, was treated by the adsorption treatment in the same manner as Example 2, and the adsorption ratio (%) of this fabric and its hand were measured. From the measured adsorption ratio (%), the total amount of the silicone components, amino group-containing diorganopolysiloxane, partial hydrolysis condensate of methyltrimethoxysilane, colloidal silica sticking to the fabric was measured, and further, the color of the emulsion composition for fiber treatment after the adsorption treatment of the fabric was measured visually. These results are shown in Table 3.

Comparison example 7

An emulsion composition for fiber treatment was prepared by the same procedure as Example 2 except that the sodium sulfonate salt of polyoxyethylene (6 mole) laurylether and tetrapropyl titanate were not used. Using the emulsion composition for fiber treatment, knitted fabric of 100 % acrylic fiber, 640 g, was treated for the adsorption treatment in the same manner as Example 2, and the adsorption ratio (%) of this fabric and hand were measured. From the measured adsorption ratio (%), the total amount of the silicone components, amino group-containing diorganopolysiloxane, partial hydrolysis condensate of methyltrimethoxysilane, colloidal silica sticking to the fabric was measured, and further, the color of the emulsion composition for fiber treatment after the adsorption treatment of the fabric was measured visually. These results are shown in Table 3.

Table 3

| | Example 4 | Comparison example 7 |
|---|---|---|
| Adsorption ratio (%) | 95.8 | 3.3 |
| Hand | Creaky hand disappeared completely, and very good. | Creaky hand existed, and insufficient. |
| Total amount of silicone components on the fiber (%) | 4.85 | 0.47 |
| Post-treatment color of composition | Clear | Opaque |

Example 5

An amino group-containing organopolysiloxane having the general formula:

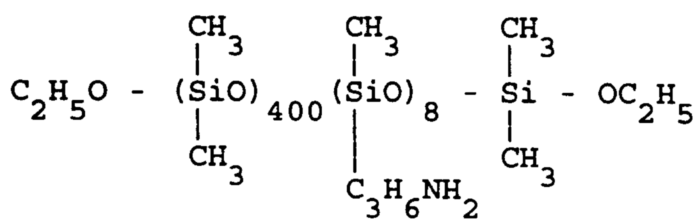

and a viscosity of 1350 centistokes, 300 parts, and partial hydrolysis condensate of methyltrimethoxysilane having a viscosity of 55 centistokes, 5 parts, were mixed uniformly. Polyoxyethylene (ethylene oxide 6 mole) laurylether 30 parts and water 150 parts were added and stirred uniformly. This mixture was emulsified using a colloid mill, and subsequently, water, 515 parts, was added to prepare a uniform emulsion. To 80 parts of the emulsion prepared, colloidal silica Nissan Chemical Industries, trade name : Snowtex AK (water 80 %, colloidal silica 20 %) 35 parts was added. Further, added to this was 1 part of zinc octate emulsion, which was prepared by emulsifying 20 parts of zinc octate, as the condensation reaction catalyst, and 2.5 parts of polyoxyethylene (45 mole) nonylphenolether, 2.5 parts of dialkyl (coconut oil) dimethylammonium chloride, and 75 parts of water. The organopolysiloxane emulsion composition was prepared in this manner.

The organopolysiloxane emulsion composition was transferred to a beaker of 10 liters, and to this, water, 6400 cc, sodium dodecylbenzenesulfonate 0.8 part, and tetra-2-ethylhexyl titanate 0.8 part were added in order, and they were uniformly dissolved and dispersed, and the emulsion composition for fiber treatment was prepared. In this emulsion composition for fiber treatment, pre-dyeing serge cloth of 100 % sheep wool, 640 g, was soaked for 60 minutes for treatment with occasional stirring.

After the treatment, the cloth was taken out of the emulsion composition, and after the excess water was blotted with filter paper, dried overnight at room temperature. Of the cloth, which was subjected to the adsorption treatment with the emulsion composition in this manner, the washing shrinkage ratio (%) and the adsorption ratio (%) were measured. Furthermore, the crease-proofing (%) was measured in accordance with the Monsanto method in JIS L1096 "general fabric testing method", and the hand was evaluated by feeling with fingers. These results are shown in Table 4. Also, the overall evaluation for the adsorption treatment method is recorded in Table 4.

Comparison example 8

An organopolysiloxane emulsion composition was prepared by the same procedure as Example 5 except that the amino group-containing organopolysiloxane in Example 5 was replaced by dimethyl-polysiloxane having the formula:

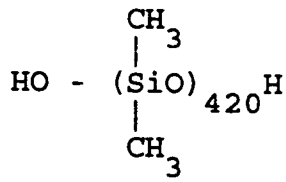

and a viscosity of 4,000 centistokes. From the organopolysiloxane emulsion composition obtained, the emulsion composition for fiber treatment was prepared similarly to Example 5 and the cloth was treated for the adsorption treatment. The treated cloth was subjected to the measurements of the washing shrinkage ratio (%), the adsorption ratio (%), the crease-proofing (%), and the hand by the same way as Example 5. These results are shown in Table 4. Also, the overall evaluation for the adsorption treatment method is recorded in Table 4.

Comparison example 9

An organopolysiloxane emulsion composition was prepared by the same procedure as Example 5 except that sodium dodecylbenzenesulfonate in Example 5 was replaced by polyoxyethylene (9.5 mole) nonylphenolether. From the organopolysiloxane emulsion composition obtained, the emulsion composition for fiber treatment was prepared similarly to Example 5 and the cloth was treated for the adsorption treatment. The treated cloth was subjected to the measurements of the washing shrinkage ratio (%), the adsorption ratio (%), the crease-proofing (%), and the hand by the same way as Example 5. These results are shown in Table 4. Also, the overall evaluation for the adsorption treatment method is recorded in Table 4.

Comparison example 10

An organopolysiloxane emulsion composition was prepared by the same procedure as Example 5 except that the partial hydrolysis condensate of methyltrimethoxysilane in Example 5 was not used. From the organopolysiloxane emulsion composition obtained, the emulsion composition for fiber treatment was prepared similarly to Example 5 and the cloth was treated for the adsorption treatment. The treated cloth was subjected to the measurements of the washing shrinkage ratio (%), the adsorption ratio (%), the crease-proofing (%), and the hand by the same way as Example 5. These results are shown in Table 4. Also, the overall evaluation for the adsorption treatment method is recorded in Table 4.

Table 4

| | Example 5 | Comparison example 8 | Comparison example 9 | Comparison example 10 |
|---|---|---|---|---|
| Washing shrinkage ratio (%) | | | | |
| Y direction | 3.1 | 8.2 | 7.5 | 6.3 |
| X direction | 1.3 | 3.7 | 3.3 | 3.6 |
| Total | 4.4 | 11.9 | 10.8 | 9.9 |
| Adsorption ratio (%) | 96.0 | 28.3 | 11.0 | 92.0 |
| Crease proofing (%) Y direction | 88.5 | 81.0 | 81.1 | 80.2 |
| Hand | Very good, and good voluminosity . | Poor pliability | Insufficient pliability | Good, but insufficient rebounding elasticity |
| Overall evaluation | Good | No good | No good | No good |

The present invention is an adsorption treatment method for fibers using the emulsion composition for fiber treatment in which organopolysiloxane emulsion composition, constituent (A), is compounded with the

uptake catalyst composition, constituent (B), to give excellent hand and shrinkage-proofing against water washing and, in particular, animal fibers represented by sheep wool.

## Claims

**1.** An emulsion composition comprising:

(A) an organopolysiloxane emulsion composition comprising:

a. 100 parts by weight of an amino alkyl-containing organopolysiloxane having the general formula selected from the group consisting essentially of:

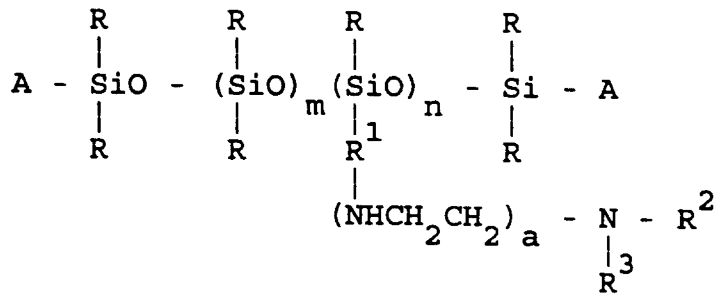

and

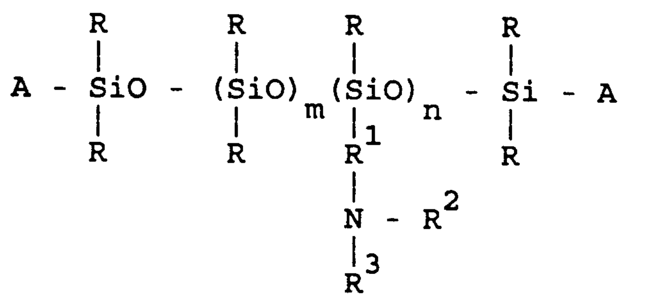

wherein each R is independently selected from monovalent hydrocarbon groups having 1 to 20 carbon atoms, $R^1$ is a divalent hydrocarbon group having 1 to 8 carbon atoms, $R^2$ and $R^3$ are each selected from hydrogen atoms or monovalent hydrocarbon groups, and A is a hydroxyl or alkoxyl group having from 1 to 5 carbon atoms, m and n are integers of 1 or larger, and a is an integer of 1 to 5, wherein the viscosity of the organopolysiloxane is at least 10 centistokes at 25°C;

b. 0.1 to 30 parts by weight of an organosilicon compound selected from the group having the general formula:

(1)

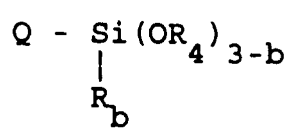

and

(2) partial hydrolyzates of (1), wherein Q is a monovalent organic group which contains a radical selected from the group consisting essentially of

(i) amino alkyl,

(ii) epoxy,

(iii) acryloxy,

(iv) methacryloxy, and

(v) a monovalent hydrocarbon group having from 1 to 5 carbon atoms; $R^4$ is a monovalent hydrocarbon group having 1 to 5 carbon atoms and b has a value of 0 or 1;

c. 1 to 50 parts by weight of colloidal silica;
d. 0.1 to 20 parts by weight of a catalyst for a condensation reaction;
e. 1 to 30 parts by weight of a surfactant selected from the group consisting essentially of
   nonionic surfactants and
   cationic surfactants, and
f. water, and

(B) 0.1 to 20 parts by weight based on 100 parts by weight of (A), of a second catalyst consisting of
g. 10 to 90 weight percent of an anionic surfactant, and
h. 90 to 10 weight percent of an ester selected from the group consisting essentially of organic titanate esters and, organic zirconate esters.

European Patent Office

# EUROPEAN SEARCH REPORT

Application Number
EP 94 11 6920

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-4 399 247 (ONA ET AL.)<br>* column 3, line 1 - line 3 *<br>* column 4, line 35 - column 5, line 32; claims *<br>--- | 1 | D06M15/643<br>C08K5/057 |
| Y | EP-A-0 474 207 (DOW CORNING TORAY SILICONE COMPANY, LTD.)<br>* the whole document * | 1 | |
| D | & JP-A-4 119 173 (DOW CORNING TORAY SILICONE)<br>--- | | |
| Y | EP-A-0 117 360 (DOW CORNING CORPORATION)<br>* page 11, last paragraph - page 16, paragraph 2; claims 1-4 *<br>--- | 1 | |
| A | EP-A-0 156 970 (WACKER-CHEMIE GMBH)<br>* the whole document *<br>--- | 1 | |
| A | EP-A-0 306 935 (WACKER-CHEMIE GMBH)<br>* page 5, line 16 - line 19; claims *<br>--- | 1 | TECHNICAL FIELDS SEARCHED (Int.Cl.6) |
| A | EP-A-0 415 254 (UNION CARBIDE CHEMICALS AND PLASTICS COMPANY, INC.)<br>* the whole document *<br>--- | 1 | D06M<br>C08K |
| A | TEXTILE RESEARCH JOURNAL.,<br>vol.63, no.10, October 1993, US<br>pages 557 - 565, XP394391<br>K.O. JANG AND K. YEH 'Effects of Silicone Softeners and Silane Coupling Agents on the Performance Properties of Cotton Fabrics'<br>* page 558, right column; tables I,IV *<br>--- | 1 | |
| A | US-A-5 236 465 (OHASHI ET AL.)<br>* claims *<br>----- | 1 | |

The present search report has been drawn up for all claims

| Place of search | Date of completion of the search | Examiner |
|---|---|---|
| THE HAGUE | 23 February 1995 | Blas, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document